(19) Europäisches Patentamt
European Patent Office
Office européen des brevets

(11) **EP 3 262 313 B1**

(12) **EUROPÄISCHE PATENTSCHRIFT**

(45) Veröffentlichungstag und Bekanntmachung des Hinweises auf die Patenterteilung:
**06.01.2021 Patentblatt 2021/01**

(21) Anmeldenummer: **16705763.7**

(22) Anmeldetag: **18.02.2016**

(51) Int Cl.:
***F16D 48/06*** *(2006.01)*

(86) Internationale Anmeldenummer:
**PCT/EP2016/053409**

(87) Internationale Veröffentlichungsnummer:
**WO 2016/135029 (01.09.2016 Gazette 2016/35)**

(54) **VERFAHREN ZUM BETREIBEN EINES ANTRIEBSSTRANGS FÜR EIN KRAFTFAHRZEUG SOWIE ENTSPRECHENDER ANTRIEBSSTRANG**

METHOD FOR OPERATING A DRIVE TRAIN FOR A MOTOR VEHICLE AND CORRESPONDING DRIVE TRAIN

PROCÉDÉ PERMETTANT DE FAIRE FONCTIONNER UN GROUPE MOTOPROPULSEUR D'UN VÉHICULE À MOTEUR ET GROUPE MOTOPROPULSEUR CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2015 DE 102015002296**

(43) Veröffentlichungstag der Anmeldung:
**03.01.2018 Patentblatt 2018/01**

(73) Patentinhaber: **Audi AG**
**85045 Ingolstadt (DE)**

(72) Erfinder:
• **GRAF, Christian**
**85053 Ingolstadt (DE)**
• **BÄR, Michael**
**85053 Ingolstadt (DE)**
• **WEIN, Michael**
**92358 Seubersdorf (DE)**
• **ARNDT, Martin**
**85049 Ingolstadt (DE)**
• **LEHNER, Stefan**
**85051 Ingolstadt (DE)**
• **BAUR, Marc**
**85049 Ingolstadt (DE)**

(56) Entgegenhaltungen:
EP-A1- 2 067 681          WO-A1-2004/027285
WO-A2-2004/028849      DE-A1-102006 001 468
DE-A1-102011 101 168

EP 3 262 313 B1

**Beschreibung**

Die Erfindung betrifft ein Verfahren zum Betreiben eines Antriebsstrangs für ein Kraftfahrzeug, mit wenigstens einer Primärantriebsachse und wenigstens einer Sekundärantriebsachse, die über eine Kupplung mit einem einstellbaren Übertragungsdrehmoment miteinander wirkverbunden sind. Siehe WO 2004/027285. Die Erfindung betrifft weiterhin einen Antriebsstrang für ein Kraftfahrzeug.

Das Verfahren dient dem Betreiben des Antriebsstrangs, wobei das Betreiben beispielsweise auf ein Antreiben des Kraftfahrzeugs, insbesondere ein Beschleunigen, gerichtet ist. Der Antriebsstrang ist für die Verwendung in dem Kraftfahrzeug vorgesehen, sodass die Erfindung auch ein Kraftfahrzeug mit einem entsprechend ausgestalteten Antriebsstrang betrifft. Der Antriebsstrang verfügt über die wenigstens eine Primärtriebsachse und die wenigstens eine Sekundärantriebsachse. Diese sind über die Kupplung miteinander wirkverbunden oder zumindest wirkverbindbar, wobei das Übertragungsdrehmoment der Kupplung, also das zwischen der Primärantriebsachse und der Sekundärantriebsachse über die Kupplung übertragene Drehmoment, einstellbar ist.

Das Übertragungsdrehmoment kann dabei vorzugsweise zwischen einem Minimalübertragungsdrehmoment und einem Maximalübertragungsdrehmoment eingestellt werden. Das Minimalübertragungsdrehmoment ist beispielsweise gleich Null, kann jedoch auch von Null verschieden, insbesondere größer als Null, sein. Das Maximalübertragungsdrehmoment hängt üblicherweise von der Ausgestaltung der Kupplung ab, ist vorzugsweise jedoch mindestens so groß, insbesondere größer, als ein von einer Antriebseinrichtung beziehungsweise einem Antriebsaggregat des Antriebsstrangs bereitstellbares Antriebsdrehmoment, welches über die Kupplung übertragen wird beziehungsweise übertragen werden soll. Das Maximalübertragungsdrehmoment liegt beispielweise bei einer maximalen Kupplungsüberpressung der Kupplung vor.

Unter dem Antriebsdrehmoment ist dabei vorzugsweise das tatsächlich an der Kupplung anliegende Drehmoment zu verstehen, welches von dem von der Antriebseinrichtung beziehungsweise dem Antriebsaggregat erzeugten Drehmoment abweichen kann. Dies ist beispielsweise aufgrund eines in der Wirkverbindung zwischen Antriebseinrichtung und Kupplung vorgesehenen Getriebes, insbesondere eines Schaltgetriebes, der Fall sein, wenn eine von Eins verschiedene Übersetzung vorliegt oder eingestellt ist. Bei der Ermittlung des an der Kupplung anliegenden Antriebsdrehmoments ist insoweit bevorzugt die Übersetzung zu berücksichtigen, die zwischen der Antriebseinrichtung beziehungsweise dem Antriebsaggregat einerseits und der Kupplung andererseits vorliegt.

Die Primärantriebsachse ist eine Achse des Antriebsstrangs beziehungsweise des Kraftfahrzeugs, welche bei Vorliegen eines auf das Antreiben des Kraftfahrzeugs gerichteten Drehmoments stets mit diesem Drehmoment oder zumindest einem Teil davon beaufschlagt wird. Die Sekundärantriebsachse kann wahlweise mit dem Drehmoment beziehungsweise zumindest einem Teil des Drehmoments beaufschlagt werden. Zu diesem Zweck ist die Kupplung vorgesehen, die zwischen der Primärantriebsachse und der Sekundärantriebsachse vorliegt. In einem ersten Betriebszustand der Kupplung ist die Sekundärantriebsachse vollständig von der Primärantriebsachse entkoppelt. Entsprechend wird das Kraftfahrzeug lediglich mittels der Primärantriebsachse angetrieben. Die Übertragung eines Drehmoments von der Primärantriebsachse auf die Sekundärantriebsachse erfolgt mithin nicht. Das Übertragungsdrehmoment ist in diesem Fall gleich Null.

In einem weiteren Betriebszustand der Kupplung ist das Übertragungsdrehmoment größer als Null, sodass das Übertragungsdrehmoment von der Primärantriebsachse auf die Sekundärantriebsachse übertragen wird. In diesem Fall trägt insoweit auch die Sekundärantriebsachse zum Antreiben des Kraftfahrzeugs bei. Das Kraftfahrzeug beziehungsweise der Antriebsstrang verfügt gemäß den vorstehenden Ausführungen zumindest zeitweise über mehrere, insbesondere mindestens zwei, angetriebene Achsen, ermöglicht jedoch auch das Antreiben von lediglich der wenigstens einen Primärantriebsachse, insbesondere genau einer einzigen Primärantriebsachse.

Beispielsweise ist die Primärantriebsachse permanent und/oder starr mit einer Antriebseinrichtung des Kraftfahrzeugs beziehungsweise des Antriebsstrangs wirkverbunden. Die Antriebseinrichtung weist dabei bevorzugt wenigstens ein Antriebsaggregat, beispielsweise eine Brennkraftmaschine, und/oder eine elektrische Maschine, sowie eine Anfahrkupplung auf. Die Primärantriebsachse ist nun insbesondere über die Anfahrkupplung mit dem Antriebsaggregat wirkverbunden beziehungsweise wirkverbindbar, während eine Wirkverbindung zwischen der Sekundärantriebsachse und dem Antriebsaggregat vorzugsweise nur über die Primärtriebsachse, insgesamt also die Kupplung, die Primärantriebsachse und die Anfahrkupplung, oder zumindest nur über die Kupplung vorliegt.

Die Kupplung kann beispielsweise als Reibungskupplung ausgeführt sein, insbesondere als Lamellenkupplung, beispielsweise als Lamellensperrenkupplung. Das maximal übertragbare Moment der Kupplung wird beispielsweise über einen Betätigungsmechanismus beziehungsweise Aktuator steuernd und/oder regelnd eingestellt. Solange der Kupplungsschlupf, entsprechend einer normierten Differenz zwischen Eingangs- und Ausgangsdrehzahl der Kupplung, ungleich Null ist, entspricht das von dem Betätigungsmechanismus eingestellte Drehmoment auch dem tatsächlich übertragenen Drehmoment. Sobald der Kupplungsschlupf gleich Null ist, kann der Betrag des tatsächlich übertragenden Drehmoments nicht mehr bestimmt werden. Nur das maximal übertragbare Drehmoment ist entsprechend des eingestellten Drehmoments, welches als Übertragungsdrehmoment bezeichnet werden kann, bekannt.

Wird bei einem bereits geringen Kupplungsschlupf oder einem Kupplungsschlupf von Null das Übertragungsdrehmoment weiter erhöht, so wird dies aufgrund der hohen Presskraft an der Kupplung als Kupplungsüberpressung bezeichnet, insbesondere im Falle der Lamellenkupplung. Die Kupplungsüberpressung wird üblicherweise vorgesehen, um Kupplungsschlupf zu verhindern beziehungsweise zu verringern, insbesondere auch bei raschen Lastwechseln. Derartige Lastwechsel können beispielweise durch Fahrbahnveränderungen auftreten. Die Kupplungsüberpressung hat jedoch auch Nachteile. Zum einen verbraucht der Betätigungsmechanismus der Kupplung mehr Energie und erzeugt unter Umständen Geräusche, welche von einem Fahrer des Kraftfahrzeugs als akustische Belastung empfunden werden können. Zum anderen wird der Betätigungsmechanismus unnötig belastet, wodurch seine Lebensdauer beeinflusst wird. Schließlich ist die Bestimmung des tatsächlich übertragenen Drehmoments lediglich mit einer geringen Genauigkeit möglich, weil der Wertebereich, in welchem es liegt, vergrößert wird.

Durch die Entkopplung der Sekundärantriebsachse können Verbrauchsersparnisse hinsichtlich des Energieverbrauchs des Antriebsstrangs realisiert werden. Besonders hoch sind diese, wenn die Kupplung zwischen der Primärantriebsachse und einer Kardanwelle des Antriebsstrangs vorliegt, über welche die Primärantriebsachse und die Sekundärantriebsachse miteinander wirkverbindbar sind. Bei einer solchen Anordnung der Kupplung kann neben der Sekundärantriebsachse auch die Kardanwelle von der Primärantriebsachse entkoppelt werden, sodass an dieser Stelle keine Verluste anfallen.

Je häufiger lediglich die Primärantriebsachse angetrieben wird, also die Sekundärantriebsachse von der Primärantriebsachse entkoppelt ist, umso geringer ist das Lastkollektiv beziehungsweise Drehmomentniveau an der Sekundärantriebsachse. Entsprechend kann diese beziehungsweise ein die Sekundärantriebsachse aufweisender Sekundärantriebsstrang kleiner ausgelegt werden, wodurch zum einen das Gewicht des Antriebsstrangs reduziert und zum anderen Bauteilkosten eingespart werden können. Insgesamt ergeben sich somit durch das Entkoppeln der Sekundärantriebsachse von der Primärantriebsachse einige Vorteile.

Der Sekundärantriebsstrang weist neben der Sekundärantriebsachse beispielsweise die Kardanwelle und/oder ein zwischen der Sekundärantriebsachse und der Kardanwelle vorliegendes Getriebe, beispielsweise ein Differenzialgetriebe beziehungsweise Achsdifferenzialgetriebe, auf. Das Getriebe kann dabei wenigstens ein Tellerrad umfassen, welches vorzugsweise mit der Kardanwelle verbunden beziehungsweise an dieser befestigt ist.

Die vorstehend angedeutete kleinere Auslegung des Sekundärantriebsstrangs kann jedoch zu Antriebsstrangschwingungen führen, insbesondere bei einer Beschleunigung des Kraftfahrzeugs, beispielsweise aus dem Stand, also bei einem Anfahren des Kraftfahrzeugs. Diese Antriebsstrangschwingungen können zu akustischen Beeinträchtigungen führen. Weiterhin können eine Steigfähigkeit, eine Anhängelast und/oder ähnliche Parameter negativ beeinflusst werden. Um diese Antriebsstrangschwingungen ausreichend zu dämpfen, wird beispielsweise eine Hardy-Scheibe verbaut. Hierzu sei auf die Druckschrift GB 497 903 hingewiesen.

Es ist nun Aufgabe der Erfindung, ein Verfahren zum Betreiben eines Antriebsstrangs für ein Kraftfahrzeug vorzuschlagen, welches gegenüber anderen Verfahren Vorteile aufweist, insbesondere eine Dämpfung der Antriebsstrangschwingungen ermöglicht.

Dies wird erfindungsgemäß mit einem Verfahren mit den Merkmalen des Anspruchs 1 erreicht.

Wird der Antriebsstrang in der Dämpfungsbetriebsart betrieben, so wird nachfolgend das Übertragungsdrehmoment aus der Schwingungsamplitude bestimmt und an der Kupplung eingestellt. Das Übertragungsdrehmoment wird insoweit anhand der Schwingungsamplitude angepasst beziehungsweise korrigiert. Beispielsweise wird zunächst das Übertragungsdrehmoment ermittelt, beispielsweise aus einer Vorgabe beziehungsweise einem Vorgabedrehmoment des Fahrers und/oder einer Fahrerassistenzeinrichtung. Anschließend wird das so ermittelte Übertragungsdrehmoment anhand der Schwingungsamplitude angepasst und nachfolgend an der Kupplung eingestellt. Beispielsweise wird aus dem Übertragungsdrehmoment die Überpressung der Kupplung bestimmt und eingestellt.

Anstelle des Übertragungsdrehmoments kann jedoch auch die Kupplungsüberpressung unmittelbar aus der Schwingungsamplitude bestimmt und an der Kupplung eingestellt werden. Weiterhin kann es vorgesehen sein, dass eine Vorsteuerung des Übertragungsdrehmoments beziehungsweise der Kupplungsüberpressung erfolgt, insbesondere anhand des Antriebsdrehmoments.

Vorzugsweise wird das Übertragungsdrehmoment derart aus der Schwingungsamplitude bestimmt, dass es nachfolgend zumindest einem Sollübertragungsdrehmoment entspricht und/oder höchstens gleich dem Maximalübertragungsdrehmoment ist. Idealerweise liegt also das Übertragungsdrehmoment zwischen dem Sollübertragungsdrehmoment und dem Maximalübertragungsdrehmoment. Besonders bevorzugt ist das Übertragungsdrehmoment deutlich größer als das Sollübertragungsdrehmoment. Beispielsweise ist es, bezogen auf die Differenz zwischen Sollübertragungsdrehmoment und Maximalübertragungsdrehmoment, um mindestens 10 %, mindestens 20 %, mindestens 30 %, mindestens 40 % oder mindestens 50 % größer als das Sollübertragungsdrehmoment. Entsprechend sind stets ausreichend Reserven in dem Übertragungsdrehmoment vorhanden, um Kupplungsschlupf zumindest größtenteils zu verhindern.

Das Sollübertragungsdrehmoment entspricht beispielsweise einem über die Sekundärantriebsachse maximal absetzbaren Drehmoment oder ist größer als dieses. Das maximal absetzbare Drehmoment kann beispielsweise mit der Beziehung

$$M_{Achse} = F_{Z, Achse} \cdot \mu_x \cdot r_{dyn}$$

ermittelt werden, wobei $M_{Achse}$ das maximal absetzbare Drehmoment, $F_{Z, Achse}$ die Achslast, $\mu_x$ der Fahrbahnreibwert und $r_{dyn}$ den dynamischen Radhalbmesser der Räder der Sekundärantriebsachse bezeichnet.

Das Sollübertragungsdrehmoment und insoweit das Übertragungsdrehmoment können also vorzugsweise höchstens auf das maximal absetzbare Drehmoment reduziert werden. Durch diese Reduzierung wird erreicht, dass der Radschlupf an der Sekundärantriebsachse reduziert wird, sodass sich der Fahrbahnreibwert beziehungsweise der Kraftschlussbeiwert zwischen Rad und Fahrbahn vergrößert. Entsprechend kann durch das Reduzieren des Übertragungsdrehmoments die Traktion des Kraftfahrzeugs verbessert werden, insbesondere durch das Dämpfen von Schwingungen innerhalb des Antriebsstrangs.

Dabei kann es vorgesehen sein, dass das maximal absetzbare Drehmoment unter Verwendung zumindest einer der folgenden Größen bestimmt wird: eine Achslast der Sekundärantriebsachse, einem Fahrbahnreibwert, einem dynamischen Radhalbmesser eines Rads der Sekundärantriebsachse und einem Übersetzungsverhältnis zwischen Kupplung und Sekundärantriebsachse. Auf die Achslast $F_{Z, Achse}$, den Fahrbahnreibwert $\mu_x$ und den dynamischen Radhalbmesser $R_{dyn}$ wurde vorstehend bereits hingewiesen. Zusätzlich kann in das maximal absetzbare Drehmoment beziehungsweise das Sollübertragungsdrehmoment das Übersetzungsverhältnis eingehen. Dieses ist beispielsweise einem Getriebe zugeordnet, welches zwischen der Kupplung und der Sekundärantriebsachse vorliegt.

Besonders bevorzugt ist es in einer weiteren Ausgestaltung der Erfindung vorgesehen, dass der Fahrbahnreibwert aus einer Längsbeschleunigung des Kraftfahrzeugs ermittelt wird. Zur Bestimmung des aktuellen Fahrbahnreibwerts können ein oder mehrere Sensoren herangezogen werden. Beispielsweise wird als Sensor ein Längsbeschleunigungssensor verwendet. Insbesondere wird während eines Beschleunigungsvorgangs des Kraftfahrzeugs die dabei auftretende maximale Längsbeschleunigung ermittelt. Der Fahrbahnreibwert ergibt sich nun beispielsweise zumindest näherungsweise aus einer Division der maximalen Längsbeschleunigung durch die Gravitationskonstante g. Dieser geschätzte Fahrbahnreibwert kann für die Berechnung des Sollübertragungsdrehmoments herangezogen werden.

Eine derartige Vorgehensweise kann jedoch zu Ungenauigkeiten führen, insbesondere wenn das Kraftfahrzeug an einem Hang steht. In diesem Fall enthält die Längsbeschleunigung einen Anteil, der von der auf das Kraftfahrzeug wirkenden Schwerkraft bewirkt wird. Entsprechend entspricht die mittels des Längsbeschleunigungssensors ermittelte Längsbeschleunigung nicht in jedem Fall der tatsächlich vorliegenden Längsbeschleunigung des Kraftfahrzeugs.

Zusätzlich oder alternativ kann, insbesondere um die vorstehend beschriebenen Ungenauigkeiten zu vermeiden, zum Ermitteln des Fahrbahnreibwerts selbstverständlich auch ein optischer Sensor herangezogen werden. Für die Bestimmung der Achslast der Sekundärantriebsachse können ein oder mehrere Sensoren verwendet werden.

Eine weitere Ausgestaltung der Erfindung sieht vor, dass die Kupplung als Lamellenkupplung ausgebildet ist und das Übertragungsdrehmoment durch Anpassen einer Anpresskraft der Lamellenkupplung eingestellt wird. Auf eine derartige Ausgestaltung der Kupplung wurde vorstehend bereits hingewiesen. Die Lamellenkupplung liegt beispielsweise als Lamellensperren-Übertragungskupplung vor. Durch entsprechendes Anpassen beziehungsweise Einstellen der Anpresskraft kann das gewünschte Übertragungsdrehmoment an der Lamellenkupplung eingestellt werden.

In einer weiteren Ausgestaltung der Erfindung ist vorgesehen, dass eine Primärachsendrehzahl und eine Sekundärachsendrehzahl anhand einer Gierrate des Kraftfahrzeugs auf einen Schwerpunkt des Kraftfahrzeugs transformiert werden. Unter bestimmten Umständen, insbesondere während einer Kurvenfahrt des Kraftfahrzeugs, kann es zu Unterschieden zwischen der Drehzahl der Primärantriebsachse, also der Primärachsendrehzahl, sowie der Drehzahl der Sekundärantriebsachse, also der Sekundärachsendrehzahl, kommen. Beispielsweise weist dabei eine Vorderachse des Kraftfahrzeugs eine höhere Drehzahl auf als eine Hinterachse des Kraftfahrzeugs. Hierbei kann die Primärantriebsachse der Vorderachse und die Sekundärantriebsachse der Hinterachse oder umgekehrt entsprechen.

Um dennoch eine zuverlässige Ermittlung der Schwingungsamplitude des Antriebsstrangs zu ermöglichen, wird die Transformation der Primärachsendrehzahl und der Sekundärachsendrehzahl vorgenommen. Diese erfolgt auf Grundlage der Gierrate des Kraftfahrzeugs, welche beispielsweise mittels eines Gierratensensors gemessen wird. Neben der Gierrate wird vorzugsweise ein Abstand der jeweiligen Antriebsachse und/oder der an der jeweiligen Achse vorgesehenen Räder zu dem Schwerpunkt des Kraftfahrzeugs herangezogen.

Eine besonders bevorzugte Ausgestaltung der Erfindung sieht vor, dass innerhalb eines bestimmten Messzeitraums, insbesondere eines mitbewegten Messzeitraums, ein Maximalwert und ein Minimalwert einer Drehzahldifferenz zwischen der Primärachsendrehzahl und der Sekundärachsendrehzahl ermittelt werden.

Während des Messzeitraums wird insoweit kontinuierlich oder in Intervallen die Drehzahldifferenz zwischen der Primärachsendrehzahl und der Sekundärachsendrehzahl bestimmt. Der Maximalwert und der Minimalwert werden nun derart bestimmt, dass sie am Ende des Messzeitraums der maximalen beziehungsweise minimalen Drehzahldifferenz entsprechen, die während des Messzeitraums aufgetreten ist.

Beispielsweise werden also der Maximalwert und der Minimalwert vor oder zu Beginn des Messzeitraums zurückgesetzt, also auf einen Ausgangswert gesetzt. Übersteigt während des Messzeitraums die momentan vorliegende Drehzahldifferenz den Maximalwert, so wird dieser gleich der Drehzahldifferenz gesetzt. Ist dagegen die momentan vorliegende Drehzahldifferenz kleiner als der Minimalwert, so wird der Minimalwert gleich der Drehzahldifferenz gesetzt. Die Länge des Messzeitraums kann beispielsweise konstant gewählt sein.

Insbesondere wird bei dem Ermitteln des Maximalwerts und des Minimalwerts ein mitbewegter Messzeitraum verwendet. Diese Vorgehensweise wird auch als "moving horizon" bezeichnet. Dabei werden in einen Speicher Werte für die Primärachsendrehzahl und die Sekundärachsendrehzahl eingeschrieben, während eine entsprechende Anzahl an Werten aus ihm herausfällt. Der Speicher wird insoweit als FIFO-Puffer (FIFO: "First In - First Out") betrieben. Die Größe des Speichers beziehungsweise Puffers wird dabei derart gewählt, dass die während des Messzeitraums anfallenden Werte vollständig in ihm abgespeichert werden können.

Eine Weiterbildung der Erfindung sieht vor, dass die Länge des Messzeitraums aus dem Verlauf der Primärachsendrehzahl und aus dem Verlauf der Sekundärachsendrehzahl ermittelt wird. Die Länge des Messzeitraums wird beispielsweise derart gewählt, dass er wenigstens eine vollständige Schwingung des Antriebsstrangs umfasst. Die Länge des Messzeitraums entspricht somit zumindest einer potenziellen Schwingungsdauer der Schwingung. Beispielsweise werden zu diesem Zweck die Primärachsendrehzahl sowie die Sekundärachsendrehzahl in Form ihrer jeweiligen Verläufe während des Messzeitraums festgehalten beziehungsweise zwischengespeichert.

Beispielsweise wird auf das Ende des Messzeitraums erkannt und mithin seine Länge festgelegt, wenn die vorstehend erläuterte Drehzahldifferenz zwischen der Primärachsendrehzahl und der Sekundärachsendrehzahl sich ausgehend von dem Minimalwert wieder vergrößert oder umgekehrt sich ausgehend von dem Maximalwert wieder verkleinert. Um sicherzustellen, dass eine vollständige Schwingung in dem Messzeitraum enthalten ist, kann auch vorgesehen sein, dass der Messzeitraum beendet und mithin seine Länge festgelegt wird, wenn die Drehzahldifferenz während des Messzeitraums zumindest zweimal ein Minimum oder Maximum aufweist. Aus dem Maximalwert und dem Minimalwert beziehungsweise dem Verlauf der Primärachsendrehzahl sowie dem Verlauf der Sekundärachsendrehzahl kann nun zum einen auf die Schwingungsdauer und zum anderen auf die Schwingungsamplitude geschlossen werden.

In einer bevorzugten Weiterbildung der Erfindung ist vorgesehen, dass bei Überschreiten eines Maximalschwellenwerts durch den Maximalwert und gleichzeitigem Unterschreiten eines Minimalschwellenwerts durch den Minimalwert in die Dämpfungsbetriebsart gewechselt wird. Die eingangs erläuterte Dämpfungsbetriebsart soll insoweit lediglich dann durchgeführt werden, wenn sowohl der Maximalschwellenwert durch den Maximalwert überschritten und zugleich der Minimalschwellenwert durch den Minimalwert unterschritten wird. Wird nur der Maximalschwellenwert überschritten, so liegt zwar Kupplungsschlupf vor, jedoch nicht zwingend eine zu dämpfende Schwingung.

Unmittelbar nach dem Wechseln in die Dämpfungsbetriebsart kann es vorgesehen sein, das Übertragungsdrehmoment lediglich mit einem begrenzten Drehmomentgradienten anzupassen. Das bedeutet, dass der Drehmomentgradient, mit welchem die Änderung des Übertragungsdrehmoments erfolgt, auf einen Maximalgradient begrenzt wird. Dieser ist vorzugsweise derart gewählt, dass die Schwingungen zumindest nicht weiter verstärkt werden.

Durch das gezielte Anpassen des Übertragungsdrehmoments auf die Schwingungsamplitude, welches üblicherweise zu einer Reduzierung des Übertragungsdrehmoments und mithin zu einer Reduzierung der Überpressung der Kupplung führt, wird Mikroschlupf in der Kupplung hervorgerufen, welcher seinerseits zu Reibung und mithin Dämpfung der Schwingung führt. Das Übertragungsdrehmoment wird dabei lediglich so weit reduziert, dass zwar die gewünschte Dämpfung erreicht wird, jedoch die positiven Halbwellen der Schwingung, welche Kupplungsschlupf entsprechen, möglichst gering bleiben. Auf diese Art und Weise wird eine hohe Robustheit des Fahrens erzielt. Zudem ermöglicht es eine starke Beschleunigung des Kraftfahrzeugs, ohne dass es zu unerwünscht hohem Kupplungsschlupf kommt. Der Maximalschwellenwert ist vorzugsweise von dem Minimalschwellenwert verschieden, insbesondere ist er größer.

In einer weiteren Ausgestaltung der Erfindung ist vorgesehen, dass nur dann in die Dämpfungsbetriebsart gewechselt wird, wenn eine Fahrgeschwindigkeit kleiner oder gleich ein Geschwindigkeitsgrenzwert und/oder eine Temperatur kleiner als ein Temperaturgrenzwert ist. Wie bereits erläutert, treten die Schwingungen des Antriebsstrangs üblicherweise bei einer Beschleunigung des Kraftfahrzeugs, insbesondere bei dem Anfahren, auf. Insoweit muss die Dämpfungsbetriebsart lediglich bei geringen Fahrgeschwindigkeiten vorgenommen werden. Zu diesem Zweck wird der Geschwindigkeitsgrenzwert festgelegt, beispielsweise in einem Bereich von 10 km/h bis 100 km/h, insbesondere von 20 km/h bis 90 km/h, vorzugsweise von 30 km/h bis 70 km/h oder von 40 km/h bis 60 km/h, besonders bevorzugt auf 50 km/h. Der Wechsel in die Dämpfungsbetriebsart wird nur dann zugelassen, wenn die Fahrgeschwindigkeit dem Geschwindigkeitsgrenzwert entspricht oder ihn unterschreitet.

Zusätzlich oder alternativ kann die Temperatur als Kriterium herangezogen werden. Nur wenn diese kleiner als der Temperaturgrenzwert ist, darf in die Dämpfungsbetriebsart gewechselt werden. Die Temperatur ist beispielsweise eine Kupplungstemperatur, insbesondere eine Kupplungslamellentemperatur von Lamellen der Kupplung, oder eine Betriebsmitteltemperatur eines Betriebsmittels der Kupplung. Als Betriebsmittel werden beispielsweise ein Hydraulikfluid und/oder ein Schmiermittel verwendet. Selbstverständlich können mehrere oder alle der genannten Temperaturen verwendet werden, wobei vorzugsweise mehrere, insbesondere voneinander verschiedene, Temperaturgrenzwerte herangezogen werden. So wird beispielswiese geprüft, ob die Kupplungslamellentemperatur kleiner als ein erster Temperaturgrenzwert ist und ob die Betriebsmitteltemperatur kleiner als ein zweiter Temperaturgrenzwert ist. Nur wenn beide Bedingungen erfüllt sind, wird der Wechsel in die Dämpfungsbetriebsart zugelassen.

Eine besonders bevorzugte weitere Ausführungsform der Erfindung sieht vor, dass bei Unterschreiten des Maximalschwellenwerts durch den Maximalwert und/oder Unterschreiten des Maximalschwellenwerts durch den Minimalwert in eine Normalbetriebsart gewechselt wird. In der Normalbetriebsart entspricht das Übertragungsdrehmoment beispielsweise einem Vorgabedrehmoment. Es wird also nicht aus der Schwingungsamplitude ermittelt oder anhand dieser korrigiert. Sind nun die vorstehend genannten Bedingungen erfüllt, so kann darauf geschlossen werden, dass Kupplungsschlupf in der Kupplung vorliegt, jedoch die Amplitude der Schwingung nicht allzu groß ist. Entsprechend muss keine (weitere beziehungsweise stärkere) Dämpfung vorgenommen werden. Zusätzlich oder alternativ kann es vorgesehen sein, dass in die Normalbetriebsart gewechselt wird, wenn die Fahrgeschwindigkeit größer ist als der Geschwindigkeitsgrenzwert und/oder die Temperatur größer oder gleich dem Temperaturgrenzwert ist.

Wird aus der Dämpfungsbetriebsart in die Normalbetriebsart gewechselt, so kann vorgesehen sein, das Übertragungsdrehmoment lediglich mit einem begrenzten Drehmomentgradienten anzupassen. Wie bereits vorstehend erläutert bedeutet dies, dass der Drehmomentgradient, mit welchem die Änderung des Übertragungsdrehmoments erfolgt, auf einen Maximalgradient begrenzt wird. Dieser ist vorzugsweise derart gewählt, dass die Schwingungen zumindest nicht weiter verstärkt werden, also nicht wieder angeregt werden.

Weiterhin kann in einer bevorzugten Ausgestaltung der Erfindung vorgesehen sein, dass das Übertragungsdrehmoment mittels eines Reglers, insbesondere eines PI-Reglers, aus der Schwingungsamplitude bestimmt wird, wobei die Schwingungsamplitude aus dem Minimalwert und dem Maximalwert, insbesondere aus der Summe von Minimalwert und Maximalwert, ermittelt wird. Dabei ist es beispielsweise vorgesehen, dass der Regler die Schwingungsamplitude in Richtung eines kleineren Werts, insbesondere in Richtung Null, regelt. Zu diesem Zweck kann es vorgesehen sein, dass der Regler das Übertragungsdrehmoment bei größerer Amplitude stärker reduziert als bei kleinerer Schwingungsamplitude. Je größer die Schwingungsamplitude ist, umso stärker reduziert der Regler das Übertragungsdrehmoment beziehungsweise umso kleiner wird das Übertragungsdrehmoment gewählt. Die Schwingungsamplitude liegt dabei als Funktion aus Minimalwert und Maximalwert vor. Besonders bevorzugt entspricht die Schwingungsamplitude der Summe aus Minimalwert und Maximalwert.

Schließlich kann in einer weiteren Ausgestaltung der Erfindung vorgesehen sein, dass das Übertragungsdrehmoment vor dem Einstellen an der Kupplung anhand eines Schwingungsoffsets angepasst wird, wobei der Schwingungsoffset aus dem Minimalwert und dem Maximalwert ermittelt wird, und wobei das Übertragungsdrehmoment umso kleiner gewählt wird, je größer der Schwingungsoffset ist. Der Schwingungsoffset kann insoweit neben der Schwingungsamplitude als Eingangsgröße des Reglers verwendet werden. Alternativ kann selbstverständlich zunächst das Übertragungsdrehmoment mittels des Reglers bestimmt werden, beispielsweise anhand der Schwingungsamplitude, und das so bestimmte Übertragungsdrehmoment anhand des Schwingungsoffsets korrigiert werden.

Der Schwingungsoffset wird ebenso wie die Schwingungsamplitude aus dem Minimalwert und dem Maximalwert ermittelt. Beispielsweise entspricht die Schwingungsamplitude der Differenz zwischen dem Minimalwert und dem Maximalwert beziehungsweise umgekehrt. Der Schwingungsoffset kann sich aus der Summe von dem Minimalwert und dem Maximalwert ergeben. Der Schwingungsoffset gibt insoweit einen Versatz eines Mittelwerts der Primärachsendrehzahl und der Sekundärachsendrehzahl von Null an. Je größer der Schwingungsoffset ist, also je weiter der Schwingungsoffset in positiver Richtung von Null abweicht, umso größer ist der Anteil der positiven Halbwellen an der Schwingung. Entsprechend muss das Übertragungsdrehmoment größer gewählt werden, um den durch das Vorliegen der positiven Halbwellen angezeigten Kupplungsschlupf zu reduzieren oder gänzlich zu beseitigen. Umgekehrt wird das Übertragungsdrehmoment umso kleiner gewählt, je kleiner der Schwingungsoffset ist, also je weiter der Schwingungsoffset in negativer Richtung von Null abweicht, weil der geringere Kupplungsschlupf eine stärkere Dämpfung zulässt.

Die Erfindung betrifft weiterhin einen Antriebsstrang für ein Kraftfahrzeug, insbesondere zur Durchführung des Verfahrens gemäß den vorstehenden Ausführungen, mit wenigstens einer Primärantriebsachse und wenigstens einer Sekundärantriebsachse, die über eine Kupplung mit einem einstellbaren Übertragungsdrehmoment miteinander wirkverbunden sind. Dabei ist vorgesehen, dass der Antriebsstrang dazu ausgebildet ist, eine Schwingungsamplitude einer Schwingung des Antriebsstrangs zu ermitteln und in einer Dämpfungsbetriebsart des Antriebsstrangs aus der Schwingungsamplitude das Übertragungsdrehmoment zu bestimmen sowie an der Kupplung einzustellen.

Auf die Vorteile einer derartigen Vorgehensweise beziehungsweise einer derartigen Ausgestaltung des Antriebsstrangs wurde bereits eingegangen. Sowohl der Antriebsstrang als auch das Verfahren können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur      eine schematische Darstellung eines Antriebsstrangs für ein Kraftfahrzeug.

Die Figur zeigt eine schematische Darstellung eines Antriebsstrangs 1, welcher beispielsweise Bestandteil eines nicht näher dargestellten Kraftfahrzeugs ist. Der Antriebsstrang weist beispielsweise eine Primärantriebsachse 2 und eine Sekundärantriebsachse 3 auf. Die Primärantriebsachse 2 weist vorzugsweise Teilachsen 4 und 5 auf, die über ein Achsdifferenzial 6 miteinander wirkverbunden sind. An jeder Teilachse 4 und 5 ist ein Rad 7 vorgesehen. Analog dazu verfügt die Sekundärantriebsachse 3 über Teilachsen 8 und 9, die über ein Achsdifferenzial 10 miteinander in Wirkverbindung stehen. An den Teilachsen 8 und 9 sind ebenfalls Räder 7 vorgesehen.

Die Primärantriebsachse 2 und die Sekundärantriebsachse 3 sind über eine Kupplung 11 mit einem einstellbaren Übertragungsdrehmoment wirkverbunden. Beispielsweise liegen dabei die Teilachsen 4 und 5 beziehungsweise 8 und 9 als Ausgangswellen des jeweiligen Achsdifferenzials 6 beziehungsweise 10 vor, während Eingangswellen 12 und 13 der Achsdifferenziale 6 und 10 mittels der Kupplung 11 miteinander koppelbar sind.

Der Antriebsstrang 1 verfügt weiterhin über eine Antriebseinrichtung 14. Diese weist beispielsweise ein hier nicht näher dargestelltes Antriebsaggregat auf, beispielsweise eine Brennkraftmaschine und/oder eine elektrische Maschine. Die Antriebseinrichtung 14 kann weiterhin eine Anfahrkupplung (hier nicht dargestellt) aufweisen. Die Antriebseinrichtung 14 ist vorzugsweise permanent mit der Primärantriebsachse 2 beziehungsweise der entsprechenden Eingangswelle 12 wirkverbunden. Eine Wirkverbindung zwischen der Antriebseinrichtung 14 und der Sekundärantriebsachse 3 liegt lediglich über die Kupplung 11 vor. Das bedeutet, dass der Antriebsstrang 1 beziehungsweise das entsprechende Kraftfahrzeug eine permanent angetriebene Achse, nämlich die Primärantriebsachse 2, und eine lediglich zeitweise angetriebene Achse, nämlich die Sekundärantriebsachse 3, verfügt.

Während eines Fahrbetriebs des Antriebsstrangs 1 wird ein bestimmtes Übertragungsdrehmoment an der Kupplung 11 eingestellt. Dieses wird in zumindest einer Dämpfungsbetriebsart des Antriebsstrangs 1 aus einer Schwingungsamplitude einer Schwingung des Antriebsstrangs 1 bestimmt. Zu diesem Zweck wird gleichzeitig oder zuvor diese Schwingungsamplitude ermittelt. Das Übertragungsdrehmoment wird dabei derart gewählt, dass die Schwingung gedämpft beziehungsweise abgebaut wird, ohne dass negative Einflüsse auf das Fahrverhalten des Kraftfahrzeugs zu befürchten sind.

Mit einer derartigen Vorgehensweise wird die Traktion des Kraftfahrzeugs verbessert, insbesondere während einer Beschleunigung, insbesondere bei einem Anfahren des Kraftfahrzeugs. Gleichzeitig wird das Vorliegen eines zu hohen Übertragungsdrehmoments an der Kupplung 11 beziehungsweise eine entsprechende Kupplungsüberpressung verringert, sodass der Energieverbrauch des Antriebsstrangs 1 insgesamt verkleinert werden kann. Zum Bestimmen der Schwingungsamplitude der Schwingung des Antriebsstrangs 1 werden beispielsweise innerhalb eines bestimmten Messzeitraums ein Maximalwert und ein Minimalwert einer Drehzahldifferenz zwischen einer Drehzahl der Primärantriebsachse 2 und einer Drehzahl der Sekundärantriebsachse 3 ermittelt.

Überschreitet nun der Maximalwert einen Maximalschwellenwert und unterschreitet gleichzeitig der Minimalwert einen Minimalschwellenwert, so wird in die Dämpfungsbetriebsart gewechselt (oder diese beibehalten) und wie vorstehend erläutert das Übertragungsdrehmoment aus der Schwingungsamplitude bestimmt. Sind die genannten Bedingungen dagegen nicht erfüllt, so wird in eine Normalbetriebsart gewechselt beziehungsweise diese weiterhin durchgeführt. Besonders vorteilhaft wird nur dann in die Dämpfungsbetriebsart gewechselt, wenn eine Fahrgeschwindigkeit des Kraftfahrzeugs kleiner oder gleich einem Geschwindigkeitsgrenzwert ist. Ist diese Bedingung nicht erfüllt, so wird die Normalbetriebsart durchgeführt beziehungsweise in diese gewechselt.

**Patentansprüche**

1.    Verfahren zum Betreiben eines Antriebsstrangs (1) für ein Kraftfahrzeug, mit wenigstens einer Primärantriebsachse (2) und wenigstens einer Sekundärantriebsachse (3), die über eine Kupplung (11) mit einem einstellbaren Übertragungsdrehmoment miteinander wirkverbunden sind, wobei eine Schwingungsamplitude einer Schwingung des Antriebsstrangs (1) ermittelt wird, wobei in einer Dämpfungsbetriebsart des Antriebsstrangs (1) eine Kupplungsüberpressung der Kupplung (11) bestimmt sowie an der Kupplung (11) eingestellt wird, und **dadurch gekennzeichnet, dass** die Kupplungsüberpressung aus dem aus der Schwingungsamplitude bestimmten Übertragungsdrehmoment oder unmittelbar aus der Schwingungsamplitude bestimmt wird.

2. Verfahren nach Anspruch 1, **dadurch gekennzeichnet, dass** eine Primärachsendrehzahl und eine Sekundärachsendrehzahl anhand einer Gierrate des Kraftfahrzeugs auf einen Schwerpunkt des Kraftfahrzeugs transformiert werden.

3. Verfahren nach einem der vorhergehenden Ansprüche, **dadurch gekennzeichnet, dass** innerhalb eines bestimmten Messzeitraums, insbesondere eines mitbewegten Messzeitraums, ein Maximalwert und ein Minimalwert einer Drehzahldifferenz zwischen der Primärachsendrehzahl und der Sekundärachsendrehzahl ermittelt werden.

4. Verfahren nach einem der vorhergehenden Ansprüche, **dadurch gekennzeichnet, dass** die Länge des Messzeitraums aus dem Verlauf der Primärachsendrehzahl und aus dem Verlauf der Sekundärachsendrehzahl ermittelt wird.

5. Verfahren nach einem der vorhergehenden Ansprüche, **dadurch gekennzeichnet, dass** bei Überschreiten eines Maximalschwellenwerts durch den Maximalwert und gleichzeitigem Unterschreiten eines Minimalschwellenwerts durch den Minimalwert in die Dämpfungsbetriebsart gewechselt wird.

6. Verfahren nach einem der vorhergehenden Ansprüche, **dadurch gekennzeichnet, dass** nur dann in die Dämpfungsbetriebsart gewechselt wird, wenn eine Fahrgeschwindigkeit kleiner oder gleich einem Geschwindigkeitsgrenzwert und/oder eine Temperatur kleiner als ein Temperaturgrenzwert ist.

7. Verfahren nach einem der vorhergehenden Ansprüche, **dadurch gekennzeichnet, dass** bei Unterschreiten des Maximalschwellenwerts durch den Maximalwert und/oder Unterschreiten des Minimalschwellenwerts durch den Minimalwert in eine Normalbetriebsart gewechselt wird.

8. Verfahren nach einem der vorhergehenden Ansprüche, **dadurch gekennzeichnet, dass** das Übertragungsdrehmoment mittels eines Reglers, insbesondere eines PI-Reglers, aus der Schwingungsamplitude bestimmt wird, wobei die Schwingungsamplitude aus dem Minimalwert und dem Maximalwert, insbesondere aus der Summe von Minimalwert und Maximalwert, ermittelt wird.

9. Verfahren nach einem der vorhergehenden Ansprüche, **dadurch gekennzeichnet, dass** das Übertragungsdrehmoment vor dem Einstellen an der Kupplung (11) anhand eines Schwingungsoffsets angepasst wird, wobei der Schwingungsoffset aus dem Minimalwert und dem Maximalwert ermittelt wird, und wobei das Übertragungsdrehmoment umso größer gewählt wird, je größer der Schwingungsoffset ist.

10. Antriebsstrang (1) für ein Kraftfahrzeug, zur Durchführung des Verfahrens nach einem oder mehreren der vorhergehenden Ansprüche, mit wenigstens einer Primärantriebsachse (2) und wenigstens einer Sekundärantriebsachse (3), die über eine Kupplung (11) mit einem einstellbaren Übertragungsdrehmoment miteinander wirkverbunden sind, wobei der Antriebsstrang (1) dazu ausgebildet ist, eine Schwingungsamplitude einer Schwingung des Antriebsstrangs (1) zu ermitteln, wobei in einer Dämpfungsbetriebsart des Antriebsstrangs (1) eine Kupplungsüberpressung der Kupplung (11) bestimmt sowie an der Kupplung (11) eingestellt wird, **dadurch gekennzeichnet, dass** die Kupplungsüberpressung aus dem aus der Schwingungsamplitude bestimmten Übertragungsdrehmoment oder unmittelbar aus der Schwingungsamplitude bestimmt wird.

**Claims**

1. Method for operating a drive train (1) for a motor vehicle, having at least one primary drive axle (2) and at least one secondary drive axle (3), which are operatively interconnected by a clutch (11) with an adjustable transmission torque, wherein a vibration amplitude of a vibration of the drive train (1) is determined, wherein an over pressing of the clutch (11) is determined in a damping mode of operation of the drive train (1) and adjusted on the clutch (11), and **characterised in that** the clutch over pressing is determined on the basis of the transmission torque, which is determined on the basis of the vibration amplitude, or is determined directly on the basis of the vibration amplitude.

2. Method according to claim 1, **characterised in that** a primary axle rotational speed and a secondary axle rotational speed are transformed with the aid of a yaw rate of the motor vehicle into a centre of gravity of the motor vehicle.

3. Method according to any of the preceding claims, **characterised in that** within a specific measurement period, in particular a synchronous measurement period, a maximum value and a minimum value of a rotational speed difference between the primary axle rotational speed and the secondary axle rotational speed are determined.

**4.** Method according to any of the preceding claims, **characterised in that** the length of the measurement period is determined on the basis of the progression of the primary axle rotational speed and the progression of the secondary axle rotational speed.

**5.** Method according to any of the preceding claims, **characterised in that** when a maximum threshold is exceeded by the maximum value and a minimum threshold is simultaneously not reached by the minimum value, a switch is made into the damping mode of operation.

**6.** Method according to any of the preceding claims, **characterised in that** a switch is only made into the damping mode of operation when a driving speed is less than or equal to a speed limit and/or a temperature is below a temperature limit.

**7.** Method according to any of the preceding claims, **characterised in that** when the maximum value is below the maximum threshold and/or the minimum value is below the minimum threshold, a switch is made into a normal mode of operation.

**8.** Method according to any of the preceding claims, **characterised in that** the transmission torque is determined by means of a controller, in particular a PI controller, on the basis of the vibration amplitude, wherein the vibration amplitude is determined on the basis of the minimum value and the maximum value, in particular on the basis of the sum of the minimum value and the maximum value.

**9.** Method according to any of the preceding claims, **characterised in that** the transmission torque is adjusted before setting the clutch (11) with the aid of a vibration offset, wherein the vibration offset is determined on the basis of the minimum value and the maximum value, and wherein the greater the transmission torque, the greater the vibration offset.

**10.** Drive train (1) for a motor vehicle, for implementing the method according to one or more of the preceding claims, having at least one primary drive axle (2) and at least one secondary drive axle (3), which are operatively connected by a clutch (11) with an adjustable transmission torque, wherein the drive train (1) is designed to determine a vibration amplitude of a vibration of the drive train (1), wherein an over pressing of the clutch (11) is determined in a damping mode of operation of the drive train (1) and adjusted on the clutch (11), **characterised in that** the clutch over pressing is determined on the basis of the transmission torque, which is determined on the basis of the vibration amplitude, or is determined directly on the basis of the vibration amplitude.

**Revendications**

**1.** Procédé de fonctionnement d'un groupe motopropulseur (1) pour un véhicule automobile, avec au moins un arbre d'entraînement primaire (2) et au moins un arbre d'entraînement secondaire (3) qui sont reliés activement entre eux par le biais d'un embrayage (11) avec un couple de transmission réglable, dans lequel une amplitude d'une vibration du groupe motopropulseur (1) est calculée, dans lequel dans un mode de fonctionnement d'amortissement du groupe motopropulseur (1) une surpression de l'embrayage (11) est déterminée ainsi qu'est réglée au niveau de l'embrayage (11), et **caractérisé en ce que** la surpression d'embrayage est déterminée à partir du couple de transmission déterminé à partir de l'amplitude de vibration ou directement à partir de l'amplitude de vibration.

**2.** Procédé selon la revendication 1, **caractérisé en ce qu'**une vitesse de rotation d'arbre primaire et une vitesse de rotation d'arbre secondaire sont transformées au moyen d'une vitesse de lacet du véhicule automobile sur un centre de gravité du véhicule automobile.

**3.** Procédé selon l'une des revendications précédentes, **caractérisé en ce que** dans une période de mesure déterminée, en particulier une période de mesure déplacée, une valeur maximale et une valeur minimale d'une différence de vitesse de rotation entre la vitesse de rotation d'arbre primaire et la vitesse de rotation d'arbre secondaire sont calculées.

**4.** Procédé selon l'une des revendications précédentes, **caractérisé en ce que** la longueur de la période de mesure est calculée à partir de l'étendue de la vitesse de rotation d'arbre primaire et à partir de l'étendue de la vitesse de rotation d'arbre secondaire.

**5.** Procédé selon l'une des revendications précédentes, **caractérisé en ce qu'**en cas de dépassement d'une valeur seuil maximale par la valeur maximale et en cas de non-atteinte simultanée d'une valeur seuil minimale par la valeur minimale, il est passé en mode de fonctionnement d'amortissement.

**6.** Procédé selon l'une des revendications précédentes, **caractérisé en ce qu'**il est passé en mode de fonctionnement d'amortissement seulement lorsqu'une vitesse de déplacement est inférieure ou égale à une valeur limite de vitesse et/ou une température est inférieure à une valeur limite de température.

**7.** Procédé selon l'une des revendications précédentes, **caractérisé en ce qu'**en cas de non-atteinte de la valeur seuil maximale par la valeur maximale et/ou en cas de non-atteinte de la valeur seuil minimale par la valeur minimale, il est passé en un mode de fonctionnement normal.

8. Procédé selon l'une des revendications précédentes, **caractérisé en ce que** le couple de transmission est déterminé au moyen d'un régulateur, en particulier un régulateur PI, à partir de l'amplitude de vibration, dans lequel l'amplitude de vibration est calculée à partie de la valeur minimale et la valeur maximale, en particulier à partir de la somme de la valeur minimale et la valeur maximale.

9. Procédé selon l'une des revendications précédentes, **caractérisé en ce que** le couple de transmission est adapté avant le réglage au niveau de l'embrayage (11) au moyen d'un déport de vibration, dans lequel le déport de vibration est calculé à partir de la valeur minimale et de la valeur maximale, et dans lequel le couple de transmission est choisi d'autant plus grand que le déport de vibration est plus grand.

10. Groupe motopropulseur (1) pour un véhicule automobile pour la réalisation du procédé selon l'une ou plusieurs des revendications précédentes, avec au moins un arbre d'entraînement primaire (2) et au moins un arbre d'entraînement secondaire (3) qui sont reliés activement entre eux par le biais d'un embrayage (11) avec un couple de transmission réglable, dans lequel le groupe motopropulseur (1) est réalisé afin de calculer une amplitude d'une vibration du groupe motopropulseur (1), dans lequel dans un mode de fonctionnement d'amortissement du groupe motopropulseur (1) une surpression de l'embrayage (11) est déterminée ainsi qu'est réglée au niveau de l'embrayage (11), **caractérisé en ce que** la surpression d'embrayage est déterminée à partir du couple de transmission déterminé à partir de l'amplitude de vibration ou directement à partir de l'amplitude de vibration.

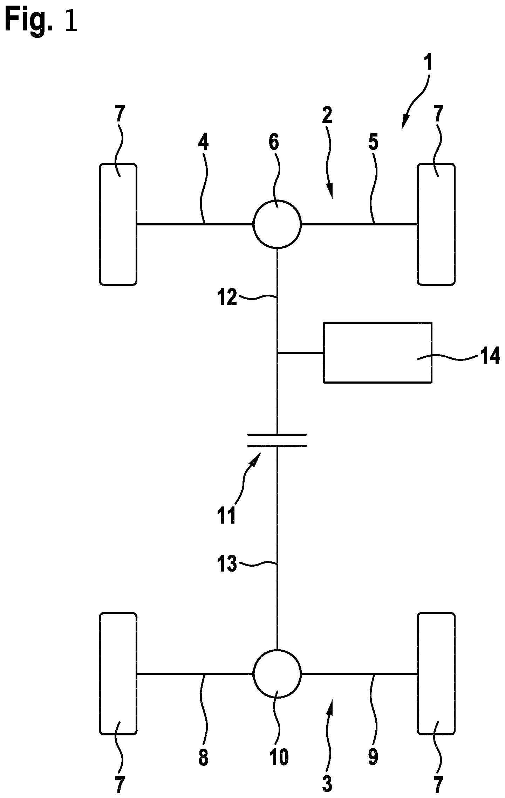

**Fig.** 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004027285 A
- GB 497903 A